# EUROPEAN PATENT APPLICATION

(11) **EP 3 179 370 A1**
(43) Date of publication of application: **14.06.2017**
(21) Application number: 14901286.6
(22) Date of filing: 03.09.2014
(51) Int. Cl.: G06F 11/36

(54) **WEBPAGE AUTOMATIC TEST METHOD AND APPARATUS**

(71) Applicant: Huawei Technologies Co. Ltd., Shenzhen, Guangdong 518129 (CN)
(72) Inventor: GAO, Xudong, Shenzhen Guangdong 518129 (CN)
(74) Representative: Gill Jennings & Every LLP
(86) International application number: PCT/CN2014/085876
(87) International publication number: WO 2016/033765

(57) **Abstract**

Embodiments of the present invention provide a web page automated testing method and apparatus. In the web page automated testing method, target network interaction data sent by a browser to a server is obtained by using a network agent module. Then, a web page automated testing tool validates the target network interaction data, thereby implementing validation on network interaction data between the browser or a web page and the server; a network request in the target network interaction data is validated, which improves a capability of finding a web page defect; and a response message returned by the server is validated, which improves accuracy of a web page display validation result.

## Description

### TECHNICAL FIELD

The present invention relates to the field of web page testing technologies, and in particular, to a web page automated testing method and apparatus.

### BACKGROUND

A web page is an important platform for network information exchange. Content and a function carried by the web page are characterized by diversity and uncertainty, and this requires the content of the web page to be designed according to different application requirements and network environments. To ensure reliability of web page performance, a test needs to be performed on a designed web page.

Web page automated testing is automated verification on input and output of a web page being tested. Currently, web page automated testing work is completed by using a web page automated testing tool, and an operating principle of the web page automated testing tool is recording and playback. The recording means recording an operation of a user on a browser and a web page by time and forming an identifiable script, by using the web page automated testing tool. The playback means that the web page automated testing tool reads a previously recorded script, and performs an operation on the browser and the web page by simulating a previous behavior of the user. It may be learned according to the foregoing testing procedure that the operation of the user on the browser and the web page is input, and an operation result is output. In addition, the operation result also changes with content of the web page. Therefore, the web page automated testing is simulating user input and verifying output, that is, verifying an input operation result.

In a specific network environment, the user generally operates the web page by using the browser on a network terminal, and the content and the function of the web page need to be supported by a server. Therefore, data interaction between the browser and the server is also a part of input and output of the web page. A network request sent by the browser to the server is output, and a response fed back by the server is input. Such an interaction process affects a web page display result, and is also a part of the test. However, according to a current web page automated testing method, only an operation of the user performed on the web page by using the browser is recorded, an operation between the browser or the web page and the server cannot be recorded, and the response of the server cannot be verified.

Lacking validation on the network request inevitably leads to a relatively low capability of finding a web page defect, and even incapability of finding a part of defects. For example, when the user enters a character "abc" in a search box of the web page, and then clicks a search button of the web page, a search character in a network request sent by the web page is "abc+space", and the web page finally displays search content obtained by searching for "abc+space", where a range of the search content is extremely smaller than a range of search content obtained by searching for "abc". This type of problem cannot be found in the current web page automated testing method. Lacking validation on a response message fed back by the server inevitably leads to lower accuracy of a web page display validation result, and even some web pages cannot be validated because of a lack of determining basis.

In conclusion, in the current web page automated testing method, a capability of finding a web page defect is relatively low, and accuracy of a web page display validation result is low.

### SUMMARY

Embodiments of the present invention provide a web page automated testing method and apparatus, so as to resolve a problem in the prior art that a capability of finding a web page defect is low, and accuracy of a web page display validation result is low.

To resolve the foregoing technical problem, the embodiments of the present invention disclose the following technical solutions:
According to a first aspect, the present invention provides a web page automated testing method, including:
   obtaining, by a terminal, target network interaction data between the terminal and a server, where the target network interaction data includes a network request sent by the terminal to the server, and a response message that is received by the terminal and is returned by the server, where the response message is a response of the server to the network request sent by the terminal; and
   validating, by the terminal, the target network interaction data.

With reference to the first aspect, in a first possible implementation manner of the first aspect, the obtaining, by a terminal, target network interaction data between the terminal and a server includes:
obtaining, by the terminal, specified network interaction data from network interaction data that is obtained by the terminal and is between the terminal and the server, where the specified network interaction data is network interaction data that includes a filter keyword; and
obtaining, by the terminal from the specified network interaction data, network interaction data that includes a query keyword, so as to obtain the target network interaction data, where the query keyword includes a character of the filter keyword.

With reference to the first aspect, in a second possible implementation manner of the first aspect, the obtaining, by a terminal, target network interaction data between the terminal and a server includes:
obtaining, by the terminal from network interaction data that is obtained by the terminal and is between the terminal and the server, network interaction data that includes the query keyword, so as to obtain the target network interaction data.

With reference to the first aspect, in a third possible implementation manner of the first aspect, the obtaining, by a terminal, target network interaction data between the terminal and a server includes:
sending, by the terminal, a filter keyword to the server, where the filter keyword is used to enable the server to obtain specified network interaction data from obtained network interaction data between the terminal and the server, where the specified network interaction data is network interaction data that includes the filter keyword;
sending, by the terminal, a query keyword to the server, where the query keyword is used to enable the server to obtain the target network interaction data from the specified network interaction network interaction data is network interaction data that includes the query keyword, and the query keyword includes at least a character of the filter keyword; and
receiving, by the terminal, the target network interaction data sent by the server.

With reference to the first aspect, in a fourth possible implementation manner of the first aspect, the obtaining, by a terminal, target network interaction data between the terminal and a server includes:
sending, by the terminal, a query keyword to the server, where the query keyword is used to enable the server to acquire the target network interaction data from obtained network interaction data between the terminal and the server, where the target network interaction data is network interaction data that includes the query keyword; and
receiving, by the terminal, the target network interaction data sent by the server.

According to a second aspect, the present invention further provides a web page automated testing method, including:
obtaining, by a server, target network interaction data between the server and a terminal, where the target network interaction data includes a network request that is received by the server and is sent by the terminal, and a response message sent by the server to the terminal, where the response message is a response of the server to the network request sent by the terminal; and
sending, by the server, the target network interaction data to the terminal, where the target network interaction data is used by the terminal to validate the target network interaction data.

With reference to the second aspect, in a first possible implementation manner of the second aspect, the obtaining, by a server, target network interaction data between the server and a terminal includes:
receiving, by the server, a query keyword sent by the terminal; and
obtaining, by the server, the target network interaction data from obtained network interaction data between the server and the terminal, where the target network interaction data is network interaction data that includes the query keyword.

With reference to the second aspect, in a second possible implementation manner of the second aspect, the obtaining, by a server, target network interaction data between the server and a terminal includes:
receiving, by the server, a filter keyword sent by the terminal;
obtaining, by the server, specified network interaction data from obtained network interaction data between the server and the terminal, where the specified network interaction data is network interaction data that includes the filter keyword;
receiving, by the server, a query keyword sent by the terminal, where the query keyword includes a character of the filter keyword; and
obtaining, by the server, the target network interaction data from the specified network interaction data, where the target network interaction data is network interaction data that includes the query keyword.

According to a third aspect, the present invention provides a web page automated testing apparatus, applied to a terminal, where the apparatus includes:
an obtaining unit, configured to obtain target network interaction data between the terminal and a server, where the target network interaction data includes a network request sent by the terminal to the server, and a response message that is received by the terminal and is returned by the server, where the response message is a response of the server to the network request sent by the terminal; and
a validation unit, configured to validate the target network interaction data obtained by the obtaining unit.

With reference to the third aspect, in a first possible implementation manner of the third aspect, the obtaining unit includes:
a first obtaining subunit, configured to obtain specified network interaction data from obtained network interaction data between the terminal and the server, where the specified network interaction data is network interaction data that includes a filter keyword; and
a second obtaining subunit, configured to obtain, from the specified network interaction data obtained by the first obtaining subunit, network interaction data that includes a query keyword, so as to obtain the target network interaction data, where the query keyword includes a character of the filter keyword.

With reference to the third aspect, in a second possible implementation manner of the third aspect, the obtaining unit includes:
a third obtaining subunit, configured to obtain, from obtained network interaction data between the terminal and the server, network interaction data that includes the query keyword, so as to obtain the target network interaction data.

With reference to the third aspect, in a third possible implementation manner of the third aspect, the obtaining unit includes a sending subunit and a receiving subunit, where
the sending subunit is configured to send a filter keyword to the server, where the filter keyword is used to enable the server to obtain specified network interaction data from obtained network interaction data between the terminal and the server, where the specified network interaction data is network interaction data that includes the filter keyword;
the sending subunit is further configured to send a query keyword to the server, where the query keyword is used to enable the server to obtain the target network interaction data from the specified network interaction data, where the target network interaction data is network interaction data that includes the query keyword, and the query keyword includes at least a character of the filter keyword; and
the receiving subunit is configured to receive the target network interaction data sent by the server.

With reference to the third aspect, in a fourth possible implementation manner of the third aspect, the obtaining unit includes a sending subunit and a receiving subunit, where
the sending subunit is configured to send a query keyword to the server, where the query keyword is used to enable the server to obtain the target network interaction data from obtained network interaction data between the terminal and the server, where the target network interaction data is network interaction data that includes the query keyword; and
the receiving subunit is configured to receive the target network interaction data sent by the server.

According to a fourth aspect, the present invention further provides a terminal, including:
a processor, configured to obtain target network interaction data between the terminal and a server, where the target network interaction data includes a network request sent by the terminal to the server, and a response message that is received by the terminal and is returned by the server, where the response message is a response of the server to the network request sent by the terminal, where
the processor is further configured to validate the target network interaction data.

With reference to the fourth aspect, in a first possible implementation manner of the fourth aspect, the processor is specifically configured to:
obtain specified network interaction data from network interaction data that is obtained by the terminal and is between the terminal and the server, where the specified network interaction data is network interaction data that includes a filter keyword; and
obtain, from the specified network interaction data, network interaction data that includes a query keyword, so as to obtain the target network interaction data, where the query keyword includes a character of the filter keyword.

With reference to the fourth aspect, in a second possible implementation manner of the fourth aspect, the processor is specifically configured to:
obtain, from network interaction data that is obtained by the terminal and is between the terminal and the server, network interaction data that includes the query keyword, so as to obtain the target network interaction data.

With reference to the fourth aspect, in a third possible implementation manner of the fourth aspect, the terminal further includes a transmitter and a receiver, where the transmitter is connected to the processor, and the receiver is connected to the processor;
the transmitter is configured to send a filter keyword to the server, where the filter keyword is used to enable the server to obtain specified network interaction data from obtained network interaction data between the terminal and the server, where the specified network interaction data is network interaction data that includes the filter keyword;
the transmitter is further configured to send a query keyword to the server, where the query keyword is used to enable the server to obtain the target network interaction data from the specified network interaction data, where the target network interaction data is network interaction data that includes the query keyword, and the query keyword includes at least a character of the filter keyword; and
the receiver is configured to receive the target network interaction data sent by the server, and send the target network interaction data to the processor.

With reference to the fourth aspect, in a fourth possible implementation manner of the fourth aspect, the terminal further includes a transmitter and a receiver, where the transmitter is connected to the processor, and the receiver is connected to the processor;
the transmitter is configured to send a query keyword to the server, where the query keyword is used to enable the server to obtain the target network interaction data from obtained network interaction data between the terminal and the server, where the target network interaction data is network interaction data that includes the query keyword; and
the receiver is configured to receive the target network interaction data sent by the server, and provide the target network interaction data for the processor.

According to a fifth aspect, the present invention provides a web page automated testing apparatus, including:
an obtaining unit, configured to obtain target network interaction data between a server and a terminal, where the target network interaction data includes a network request that is received by the server and is sent by the terminal, and a response message sent by the server to the terminal, where the response message is a response of the server to the network request sent by the terminal; and
a sending unit, configured to send the target network interaction data obtained by the obtaining unit to the terminal, where the target network interaction data is used by the terminal to validate the target network interaction data.

With reference to the fifth aspect, in a first possible implementation manner of the fifth aspect, the obtaining unit includes a receiving subunit and an obtaining subunit, where
the receiving subunit is configured to receive a query keyword sent by the terminal; and
the obtaining subunit is configured to obtain the target network interaction data from obtained network interaction data between the server and the terminal, where the target network interaction data is network interaction data that includes the query keyword received by the receiving subunit.

With reference to the fifth aspect, in a second possible implementation manner of the fifth aspect, the obtaining unit includes a receiving subunit and an obtaining subunit, where
the receiving subunit is configured to receive a filter keyword sent by the terminal;
the obtaining subunit is configured to obtain specified network interaction data from obtained network interaction data between the server and the terminal, where the specified network interaction data is network interaction data that includes the filter keyword received by the receiving subunit;
the receiving subunit is further configured to receive a query keyword sent by the terminal, where the query keyword includes a character of the filter keyword; and
the obtaining subunit is further configured to obtain the target network interaction data from the specified network interaction data, where the target network interaction data is network interaction data that includes the query keyword received by the receiving subunit.

According to a sixth aspect, the present invention provides a server, including a processor and a transmitter, where the transmitter is connected to the processor;
the processor is configured to obtain target network interaction data between the server and a terminal, where the target network interaction data includes a network request that is received by the server and is sent by the terminal, and a response message sent by the server to the terminal, where the response message is a response of the server to the network request sent by the terminal; and
the transmitter is configured to send the target network interaction data obtained by the processor to the terminal, where the target network interaction data is used by the terminal to validate the target network interaction data.

With reference to the sixth aspect, in a first possible implementation manner of the sixth aspect, the server further includes a receiver, where the receiver is connected to the processor;
the receiver is configured to receive a query keyword sent by the terminal; and
the processor is specifically configured to obtain the target network interaction data from obtained network interaction data between the server and the terminal, where the target network interaction data is network interaction data that includes the query keyword sent by the receiver.

With reference to the sixth aspect, in a second possible implementation manner of the sixth aspect, the server further includes a receiver, where the receiver is connected to the processor;
the receiver is configured to receive a filter keyword sent by the terminal;
the processor is specifically configured to obtain specified network interaction data from obtained network interaction data between the server and the terminal, where the specified network interaction data is network interaction data that includes the filter keyword sent by the receiver;
the receiver is further configured to receive a query keyword sent by the terminal, where the query keyword includes a character of the filter keyword; and
the processor is specifically configured to obtain the target network interaction data from the specified network interaction data, where the target network interaction data is network interaction data that includes the query keyword sent by the receiver.

According to a seventh aspect, the present invention further provides a computer storage medium, where the computer storage medium may store a program, and when the program is executed, a step according to any one of the possible implementation manners of the first aspect is performed.

According to an eighth aspect, the present invention further provides a computer storage medium, where the computer storage medium may store a program, and when the program is executed, a step according to any one of the possible implementation manners of the second aspect is performed.

It may be learned from the foregoing technical solutions that, in the web page automated testing method provided in the embodiments of the present invention, a terminal obtains specified network interaction data between a browser inside the terminal and a server. Then, target network interaction data is determined from the specified network interaction data, a parameter of a network request in the target network interaction data is resolved, and whether a network request sent by the terminal is accurate is validated, which improves a capacity of finding a web page defect. In addition, a parameter of a response message returned by the server is resolved, and whether content displayed on a web page of the browser is accurate is validated, which improves accuracy of a web page display validation result.

### BRIEF DESCRIPTION OF DRAWINGS

Drawings of the specification that constitute a part of the present application are used to provide further understanding of the present invention, and schematic embodiments of the present invention and descriptions thereof are used to explain the present invention, which do not constitute an improper limitation to the present invention. In the drawings:
FIG. 1 shows a block diagram of a network agent module according to an embodiment of the present invention;
FIG. 2 shows a schematic flowchart of a web page automated testing method according to an embodiment of the present invention;
FIG. 3 shows a schematic flowchart of a method of S110 in FIG. 2 according to an embodiment of the present invention;
FIG. 4 shows another schematic flowchart of a method of S110 in FIG. 2 according to an embodiment of the present invention;
FIG. 5 shows still another schematic flowchart of a method of S110 in FIG. 2 according to an embodiment of the present invention;
FIG. 6 shows a schematic flowchart of another web page automated testing method according to an embodiment of the present invention;
FIG. 7 shows a schematic flowchart of still another web page automated testing method according to an embodiment of the present invention;
FIG. 8A and FIG.8B are a chematic flowchart of yet another web page automated testing method according to an embodiment of the present invention;
FIG. 9 shows a schematic structural diagram of a web page automated testing apparatus according to an embodiment of the present invention;
FIG. 10 shows a schematic structural diagram of another web page automated testing apparatus according to an embodiment of the present invention;
FIG. 11 shows a schematic structural diagram of a terminal according to an embodiment of the present invention;
FIG. 12 shows a schematic structural diagram of another terminal according to an embodiment of the present invention;
FIG. 13 shows a schematic structural diagram of a server according to an embodiment of the present invention; and
FIG. 14 shows a schematic structural diagram of a server according to an embodiment of the present invention.

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

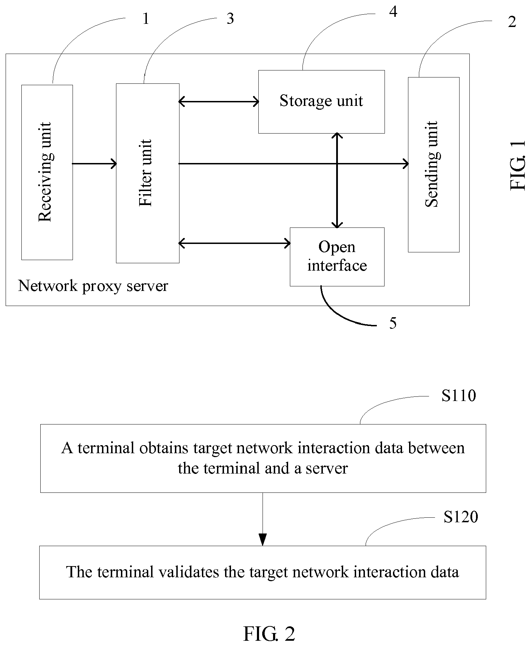

Referring to FIG. 1, FIG. 1 shows a block diagram of a network agent module according to an embodiment of the present application. As shown in FIG. 1, different from a conventional network agent module, in addition to a receiving unit 1 and a sending unit 2, the network agent module includes a filter unit 3, a storage unit 4, and an open interface 5.

The filter unit 3 has a function of performing initial filtering on network interaction data. A browser generates many requests in a process of loading a web page, for example, a request for a CSS (Cascading Style Sheets, cascading style sheet), JS (JavaScript), a picture, music, and service data (for example, data included in a table of the web page). The network agent module needs to store a network request and a response message that are concerned by a web page test engineer. Specifically, the network request and the response message may be obtained by means of filtering by the filter unit 3. The storage unit 4 is configured to store the network request and the response message, and provide the network request and the response message for a web page automated testing tool through the open interface 5.

Referring to FIG. 2, FIG. 2 shows a schematic flowchart of a web page automated testing method according to an embodiment of the present invention. This method is applied to a terminal. The terminal may be a terminal device by using which a web page can be browsed, such as a PC, a notebook computer, a tablet computer, and a smartphone.

The terminal in this embodiment is integrated with a web page automated testing tool. The network agent module shown in FIG. 1 obtains network interaction data between the terminal and a server, and then provides the network interaction data for the web page automated testing tool. Finally, the web page automated testing tool validates the network interaction data.

As shown in FIG. 2, the method includes steps S110-S120:
S110. The terminal obtains target network interaction data between the terminal and the server.

The target network interaction data includes a network request sent by the terminal to the server, and a response message that is received by the terminal and is returned by the server. The response message is a response of the server to the network request sent by the terminal.

The web page automated testing tool in the terminal enables the network agent module, then invokes the browser, and sets an address of the network agent module for the browser. The web page automated testing tool operates the browser, and the browser sends a corresponding network request by using the terminal. The network agent module receives the network request, and forwards the network request to the server. After receiving a response message returned by the server in response to the network request, when sending the response message to the browser, the network agent module replicates and stores the target network interaction data between the terminal and the server.

When the network agent module is integrated into the web page automated testing tool, the web page automated testing tool enables the network agent module in an initialization manner. When the network agent module is integrated into another software of the terminal, the network automated testing tool enables the network agent module by using a start command.

Network interaction data that a network engineer actually wants to test may be only a specific type of network interaction data in the network interaction data between the terminal and the server. Therefore, the terminal only needs to obtain the network interaction data that the web page test engineer actually wants to test.

For example, the web page test engineer sets one or more query keywords by using the web page automated testing tool in the terminal, and transfers the query keyword to the network agent module through an open interface of the network agent module. The network agent module obtains the target network interaction data from obtained network interaction data between the terminal and the server. The target network interaction data is network interaction data that includes the query keyword.

S120. The terminal validates the target network interaction data.

After obtaining the target network interaction data, the web page automated testing tool determines whether an operation on the browser or the web page is consistent with a parameter in the network request. If the parameters are consistent, it indicates that a network request sent by the browser or the web page is accurate; if the parameters are inconsistent, it indicates that the network request sent by the browser or the web page is inaccurate. For example, when a user enters a character "abc" in a search field of a web page, a network request sent by the terminal to the server is obtained, and it is determined whether the network request is consistent with an operation of the user on the web page. The web page automated testing tool resolves a response message, and determines whether a message obtained by means of resolution is consistent with content displayed on the web page, so as to validate accuracy of the content displayed on the web page.

In the web page automated testing method provided in this embodiment, a terminal obtains target network interaction data between the terminal and a server by using a network agent module; then validates a network request in the target network interaction data by using a web page automated testing tool, so as to improve a capability of finding a web page defect; and validates a response message returned by the server, so as to improve accuracy of a web page display validation result.

In an embodiment provided by the present invention, according to different integration locations of the network agent module, a specific process of S110 that the terminal obtains target network interaction data between the terminal and the server in FIG. 2 may be classified into the following two types:
(1) The network agent module is integrated on a terminal side.

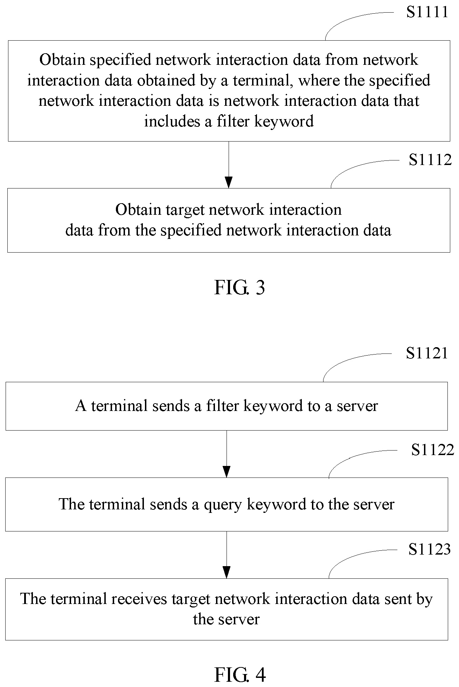

Referring to FIG. 3, FIG. 3 shows a schematic flowchart of a method for obtaining target network interaction data according to an embodiment of the present invention. This method is applied to a terminal, and in this method, the target network interaction data is obtained by using a filter keyword and a query keyword. As shown in FIG. 3, the method includes the following steps:
S1111. Obtain specified network interaction data from network interaction data obtained by the terminal, where the specified network interaction data is network interaction data that includes a filter keyword.

A network agent module obtains, from received network interaction data between the terminal and a server by means of filtering, the network interaction data that includes the filter keyword, so as to obtain the specified network interaction data.

A network test engineer may set one or more filter keywords by using a web page automated testing tool, and transfer the filter keyword to the network agent module through an open interface of the network agent module. The network agent module obtains only network interaction data that includes the filter keyword, so as to obtain specified network interaction data. That is, the specified network interaction data is a part of the network interaction data between the terminal and the server.

The network agent module determines whether the received network interaction data between the terminal and the server includes the filter keyword. If the received network interaction data includes the filter keyword, the network interaction data that includes the filter keyword is replicated and stored in a storage unit; if the received network interaction data does not include the filter keyword, no processing is performed on the network interaction data. Then the network agent module continues to determine whether a next pair of network interaction data includes the filter keyword. For example, when the filter keyword is "wd=", the network agent module obtains, from the received network interaction data between the terminal and the server by means of filtering, the following two pairs of network interaction data, and stores the two pairs of network interaction data into the storage unit.
Network request 1:
   http://www.baidu.com/s?wd=1&rsv bp=0&tn=baidu&rsv spt=3&ie=utf-8 &rsv_enter=1&rsv_sug3=2&rsv_sug4=16&rsv_sug1=1&rsv_sug2=0&inputT=864&r sv_sug=2;

   A corresponding response message also includes the filter keyword "wd=", and the response message is not shown herein.
Network request 2:
   http://suggestion.baidu.com/su?wd=&cb=window.bdsug.sugPreRequest&s id=4301_1425_4414_4261_4202_4450_4587&t=1387161319508;
Response message 2:
   window.bdsug.sugPreRequest( {q:"",p:false,s:[]} ).

In this embodiment, if no filter keyword is set, no network interaction data is stored.

It should be noted that the web page test engineer may set the filter keyword at any time. For example, the filter keyword may be set when the network agent module is enabled, or may be set after the network agent module runs for a period of time. Only after receiving the filter keyword, the network agent module performs filtering on the network interaction data, and replicates and saves the network interaction data that includes the filter keyword.

S 1112. Obtain, by means of obtaining, target network interaction data from the specified network interaction data.

The target network interaction data is network interaction data that includes a query keyword. The query keyword includes a character of the filter keyword.

The network test engineer may set the query keyword by using the web page automated testing tool, and transfer the query keyword to the network agent module through the open interface of the network agent module.

The network agent module determines whether the network interaction data that includes the query keyword exists in the specified network interaction data stored in the storage unit. If there exists the network interaction data that includes the query keyword, the network interaction data that includes the query keyword is fed back to the web page automated testing tool to obtain the target network interaction data. If there does not exist the network interaction data that includes the query keyword, null is returned to the web page automated testing tool. It can be learned from this that, the target network interaction data is partial network interaction data in the specified network interaction data.

The foregoing example is continued, and the network agent module stores the two pairs of network interaction data that includes the filter keyword "wd=". It is assumed that the query keyword is "wd= 1". If the network agent module finds that the network request 1 and a response message 1 in the storage unit include "wd=1", the network request 1 and the response message 1 are fed back to the web page automated testing tool.

In the method for obtaining target network interaction data provided in this embodiment, a filter keyword is set, and a network agent module in a terminal obtains specified network interaction data from received network interaction data between the terminal and a server; then a query keyword is set, and the network agent module in the terminal obtains target network interaction data from the obtained specified network interaction data. In this way, a storage unit of the network agent module needs to store only network interaction data that includes the filter keyword, which greatly saves storage space.

In another embodiment of the present invention, the terminal obtains, from obtained network interaction data, network interaction data that includes the query keyword, so as to obtain the target network interaction data. That is, the terminal obtains the target network interaction data only by using the query keyword.

In specific implementation, a network agent module in a terminal obtains network interaction data between the terminal and a server, and replicates and stores the network interaction data into a storage unit; after receiving a query keyword transferred by a web page automated testing tool, obtains network interaction data that includes the query keyword from the storage unit, and sends the network interaction data to the web page automated testing tool, so that the web page automated testing tool validates a network request and a corresponding response message that are in target network interaction data.
(2) The network agent module is integrated on a server side.

Referring to FIG. 4, FIG. 4 shows a schematic flowchart of another method for obtaining target network interaction data according to an embodiment of the present invention. This method is applied to a terminal, and this method is similar to that in the embodiment shown in FIG. 3. As shown in FIG. 4, the method may include the following steps:
S1121. The terminal sends a filter keyword to the server.

The filter keyword is used to enable the server to obtain specified network interaction data from obtained network interaction data between the terminal and the server. The specified network interaction data is network interaction data that includes the filter keyword.

S1122. The terminal sends a query keyword to the server.

The query keyword is used to enable the server to obtain target network interaction data from the specified network interaction data. The target network interaction data is network interaction data that includes the query keyword, and the query keyword includes at least a character of the filter keyword.

S1123. The terminal receives the target network interaction data sent by the server.

In all network interaction data between the terminal and the server, the network interaction data that includes the filter keyword is the specified network interaction data; in the specified network interaction data, the network interaction data that includes the query keyword is the target network interaction data. The target network interaction data is network interaction data that needs to be validated by a web page automated testing tool. Therefore, only the target network interaction data needs to be sent to the terminal, and the specified network interaction data does not need to be sent to the terminal.

In the method for obtaining target network interaction data provided in this embodiment, a terminal transfers a filter keyword to a server, so that the server obtains only specified network interaction data from received network interaction data between the terminal and the server; then, the terminal transfers a query keyword to the server, and the server obtains target network interaction data from the obtained specified network interaction data. In this way, only the specified network interaction data needs to be stored on a server side, which greatly saves storage space.

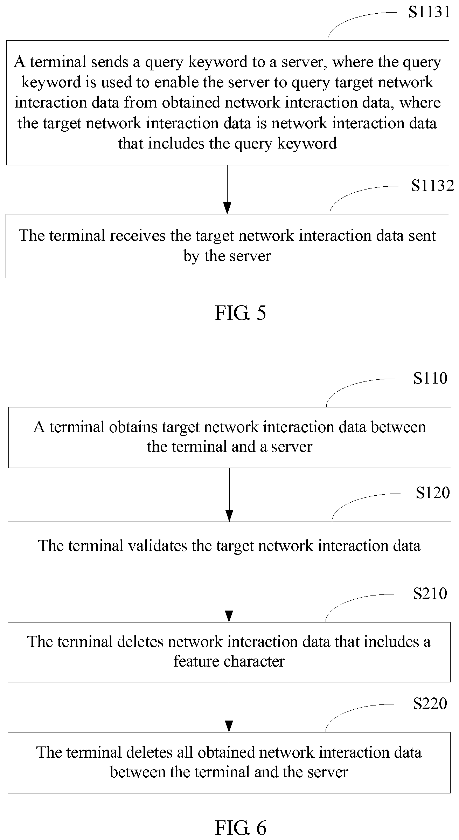

In another embodiment of the present invention, only a query keyword is set. A network agent module in a server obtains target network interaction data by performing filtering on received network interaction data between the server and the terminal. The target network interaction data is network interaction data that includes the query keyword. As shown in FIG. 5, a method for obtaining target network interaction data includes the following steps:
S 1131. The terminal sends a query keyword to the server. The query keyword is used to enable the server to query target network interaction data from obtained network interaction data. The target network interaction data is network interaction data that includes the query keyword.

S 1132. The terminal receives the target network interaction data sent by the server.

In the method for obtaining target network interaction data provided in this embodiment, a terminal transfers a query keyword to a server, so that the server obtains, from network interaction data between the terminal and the server, network interaction data that includes the query keyword, and feeds back the network interaction data that includes the query keyword to the terminal.

Referring to FIG. 6, FIG. 6 shows a schematic flowchart of another web page automated testing method according to an embodiment of the present invention. This method is applied to a terminal, and on the basis of the embodiment shown in FIG. 2, the method may further include steps S210-S220. S110-S120 in FIG. 6 are the same as S110-S120 shown in FIG. 2, and are not described herein again.

S210. The terminal deletes network interaction data that includes a feature character.

In specific implementation, if a network agent module is integrated into the terminal, a web page automated testing tool in the terminal sends a delete instruction to the network agent module in the terminal through an open interface. The delete instruction includes the feature character. When receiving the delete instruction, the network agent module deletes the network interaction data that includes the feature character.

The feature character may be any segment of character string in a network request or a response message. For example, when the web page automated testing tool repeatedly performs a completely same operation twice on a browser or a web page, and needs to validate network interaction data generated during the second operation, before performing the second operation, the web page automated testing tool needs to delete a network request and a response message generated during the first operation.

S220. The terminal deletes all obtained network interaction data between the terminal and the server.

If the network agent module is integrated into the terminal, the web page automated testing tool in the terminal sends an empty instruction to the network agent module through the open interface. After receiving the empty instruction, the network agent module empties all network interaction data stored in a storage unit, so as to save storage space.

An execution sequence of S210 and S220 is not strictly limited. S220 may be first performed and then S210 provided that S210-S220 are performed after the network agent module stores the network interaction data.

In the web page automated testing method provided in this embodiment, network interaction data that has been stored in a network agent module of a terminal and includes a feature character can be deleted, and all stored network interaction data can be emptied, thereby saving storage space of the network agent module.

Corresponding to the foregoing embodiments of the web page automated testing method applied to the terminal, if the network agent module is integrated into the server, the present invention further provides an embodiment of a web page automated testing method applied to a server side.

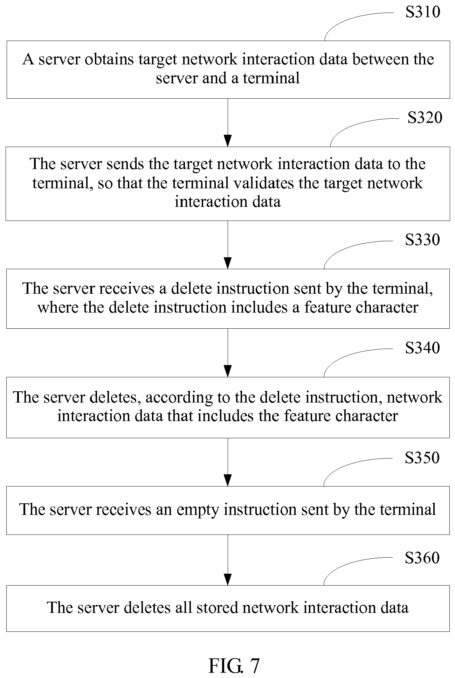

Referring to FIG. 7, FIG. 7 shows a schematic flowchart of another web page automated testing method according to an embodiment of the present invention. This method is applied to a server. As shown in FIG. 7, the method includes the following steps:
S310. The server obtains target network interaction data between the server and a terminal.

The target network interaction data includes a network request that is received by the server and is sent by the terminal, and a response message sent by the server to the terminal. The response message is a response of the server to the network request sent by the terminal.

S310 may be implemented in the following two manners:
(1) The first implementation manner of S310:
   Step 1: The server receives a query keyword sent by the terminal.
   Step 2: The server obtains the target network interaction data from obtained network interaction data between the server and the terminal, where the target network interaction data is network interaction data that includes the query keyword.

   The query keyword is set on a terminal side. The server obtains, from the obtained network interaction data between the server and the terminal by means of filtering, the network interaction data that includes the query keyword.
(2) The second implementation manner of S310:
   Step 11: The server receives a filter keyword sent by the terminal.
   Step 12: The server obtains specified network interaction data from obtained network interaction data between the server and the terminal, where the specified network interaction data is network interaction data that includes the filter keyword.
   Step 13: The server receives a query keyword sent by the terminal, where the query keyword includes a character of the filter keyword.
   Step 14: The server obtains the target network interaction data from the specified network interaction data. The target network interaction data is network interaction data that includes the query keyword.

S320. The server sends the target network interaction data to the terminal, so that the terminal validates the target network interaction data.

In the web page automated testing method provided in this embodiment, a server obtains target network interaction data between the server and a terminal, and then sends the target network interaction data to the terminal, so that the terminal validates the target network interaction data, thereby implementing validation on a web page or a browser.

Preferably, as shown in FIG. 7, the method may further include:
S330. The server receives a delete instruction sent by the terminal, where the delete instruction includes a feature character.

S340. The server deletes, according to the delete instruction, network interaction data that includes the feature character.

S350. The server receives an empty instruction sent by the terminal.

S360. The server deletes all stored network interaction data.

A server provided in this embodiment obtains, by using a network agent module, specified network interaction data sent by a browser to the server; then obtains target network interaction data from the specified network interaction data, and provides the target network interaction data for a web page automated testing tool. The web page automated testing tool validates the target network interaction data, thereby implementing validation on network interaction data between the browser or a web page and the server, so as to improve a capability of testing a web page defect.

The foregoing method embodiments applied to a network agent module and the method embodiments applied to a web page automated testing tool may be all integrated into the web page automated testing tool for implementation, or may be separately and independently implemented.

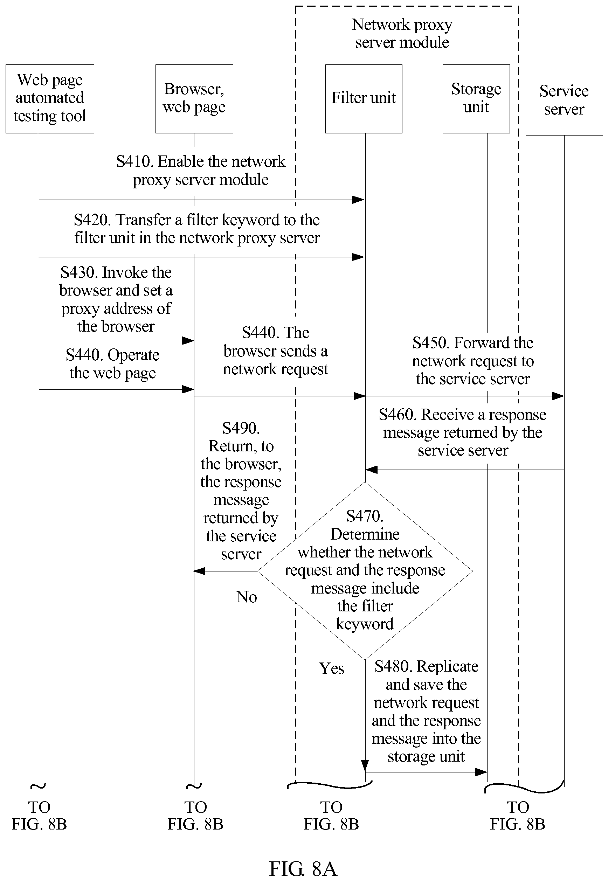

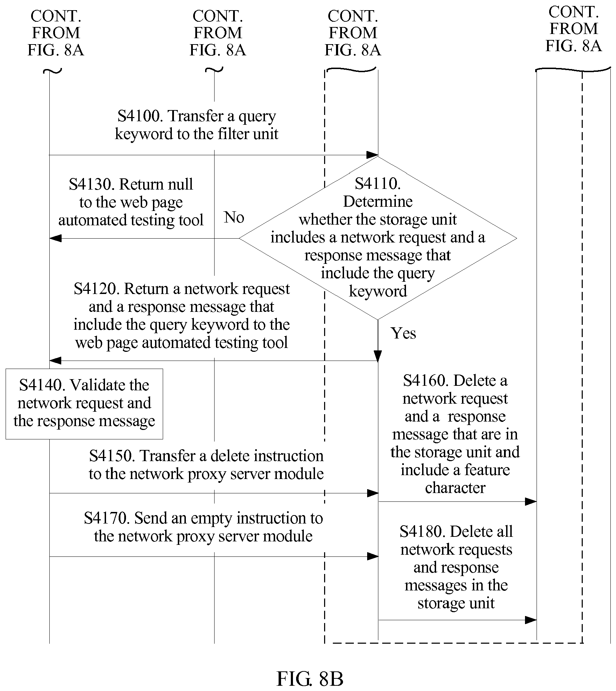

Referring to FIG. 8A and FIG.8B, FIG. 8A and FIG.8B are a schematic flowchart of a web page automated testing method. As shown in FIG. 8A and FIG.8B, the method includes the following steps:
S410. A web page automated testing tool enables a network agent module.

The web page automated testing tool is integrated into a terminal. If the network agent module is integrated into the web page automated testing tool in the terminal, the web page automated testing tool initializes the network agent module; if the network agent module is integrated into a server, the web page automated testing tool enables the network agent module by using a command.

S420. The web page automated testing tool transfers a filter keyword to a filter unit in the network agent module, for example, the filter keyword is "wd=".

S430. The web page automated testing tool invokes a browser and sets a proxy address of the browser.

S440. The web page automated testing tool operates a web page so that the browser sends a network request.

For example, when the web page automated testing tool opens a web page "http://www.baidu.com" in the browser, and searches for "1" by using the search engine Baidu, the browser sends a network request, receives a response message returned by the server, and displays a search result page.

S450. The network agent module receives the network request and forwards the network request to a corresponding server.

S460. The network agent module receives a response message returned by the server, where the response message is a response of the server to the network request sent by the terminal.

S470. The network agent module determines whether the network request and the response message include the filter keyword, if the network request and the response message include the filter keyword, step S480 is performed; if the network request and the response message do not include the filter keyword, step S490 is performed.

S480. The network agent module replicates the network request and the response message, and saves the network request and the response message into a storage unit; and then performs S490.

S490. The network agent module returns, to the browser, the response message returned by the server.

S4100. The web page automated testing tool transfers a query keyword to the filter unit, for example, the query keyword is "wd=1".

S4110. The filter unit determines whether the storage unit includes a network request and a response message that include the query keyword, if the storage unit includes a network request and a response message that include the query keyword, S4120 is performed; if the storage unit does not include a network request and a response message that include the query keyword, S4130 is performed, where network interaction data that includes "wd=1" is obtained by filtering from stored network interaction data.

S4120. Return the network request and the response message that include the query keyword to the web page automated testing tool.

If the storage unit includes multiple pairs of network requests and response messages that include the query keyword, only the first pair of network request and response message that include the query keyword is returned.

S4130. Return null to the web page automated testing tool.

S4140. The web page automated testing tool validates the received network request and response message.

Then, steps S440-S4140 are repeatedly performed to validate multiple pairs of network requests and response messages.

S4150. The web page automated testing tool sends a delete instruction to the network agent module, where the delete instruction includes a feature character.

S4160. The network agent module deletes, according to the delete instruction, a network request and a corresponding response message that include the feature character.

S4170. The web page automated testing tool sends an empty instruction to the network agent module.

S4180. The network agent module deletes all network requests and response messages in the storage unit according to the empty instruction.

Corresponding to the foregoing web page automated testing method embodiments, the present invention further provides a web page automated testing apparatus.

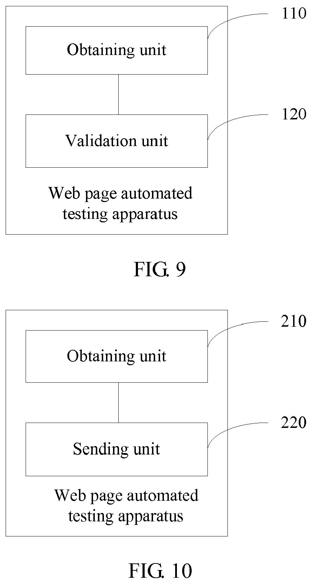

Referring to FIG. 9, FIG. 9 shows a schematic structural diagram of a web page automated testing apparatus according to an embodiment of the present invention. This apparatus is applied to a terminal. As shown in FIG. 9, the apparatus includes an obtaining unit 110 and a validation unit 120.

The obtaining unit 110 is configured to obtain target network interaction data between the terminal and a server.

In this embodiment of the present invention, network interaction data between the terminal and the server may be obtained by using a network agent module.

The target network interaction data includes a network request sent by the terminal to the server, and a response message that is received by the terminal and is returned by the server. The response message is a response of the server to the network request sent by the terminal.

In an embodiment of the present invention, the network agent module is integrated into the terminal, and the obtaining unit may include a first obtaining subunit and a second obtaining subunit.

The first obtaining subunit is configured to obtain specified network interaction data from obtained network interaction data between the terminal and the server. The specified network interaction data is network interaction data that includes a filter keyword.

The second obtaining subunit is configured to obtain, from the specified network interaction data obtained by the first obtaining subunit, network interaction data that includes a query keyword, so as to obtain the target network interaction data. The query keyword includes a character of the filter keyword.

In another embodiment of the present invention, the network agent module is integrated into the terminal, and the obtaining unit includes a third obtaining subunit.

The third obtaining subunit is configured to obtain, from obtained network interaction data between the terminal and the server, network interaction data that includes the query keyword, so as to obtain the target network interaction data.

In still another embodiment of the present invention, the network agent module is integrated on a server side, and the obtaining unit includes a sending subunit and a receiving subunit.

The sending subunit is configured to send a filter keyword to the server. The filter keyword is used to enable the server to obtain specified network interaction data from obtained network interaction data between the terminal and the server. The specified network interaction data is network interaction data that includes the filter keyword.

The sending subunit is further configured to send a query keyword to the server. The query keyword is used to enable the server to obtain the target network interaction data from the specified network interaction data. The target network interaction data is network interaction data that includes the query keyword, and the query keyword includes at least a character of the filter keyword.

The receiving subunit is configured to receive the target network interaction data sent by the server.

In yet another embodiment of the present invention, the network agent module is integrated into the server, and the obtaining unit includes a sending subunit and a receiving subunit.

The sending subunit is configured to send a query keyword to the server. The query keyword is used to enable the server to obtain the target network interaction data from obtained network interaction data between the terminal and the server. The target network interaction data is network interaction data that includes the query keyword.

The receiving subunit is configured to receive the target network interaction data sent by the server.

The validation unit 120 is configured to validate the target network interaction data obtained by the obtaining unit 110.

The web page automated testing apparatus provided in this embodiment obtains target network interaction data between the terminal and a server by using an obtaining unit; then validates a network request in the target network interaction data by using a validation unit, which improves a capability of finding a web page defect; and validates a response message returned by the server, which improves accuracy of a web page display validation result.

Corresponding to the foregoing web page automated testing method embodiment applied to the server, an embodiment of the present invention further provides a web page automated testing apparatus embodiment applied to the server.

Referring to FIG. 10, FIG. 10 shows a schematic structural diagram of another web page automated testing apparatus according to an embodiment of the present invention. This apparatus is applied to a server. The apparatus includes an obtaining unit 210 and a sending unit 220.

The obtaining unit 210 is configured to obtain target network interaction data between the server and a terminal.

The target network interaction data includes a network request that is received by the server and is sent by the terminal, and a response message sent by the server to the terminal. The response message is a response of the server to the network request sent by the terminal.

In an embodiment of the present invention, the obtaining unit 210 may include a receiving subunit and an obtaining subunit.

The receiving subunit is configured to receive a query keyword sent by the terminal.

The obtaining subunit is configured to obtain the target network interaction data from obtained network interaction data between the server and the terminal, where the target network interaction data is network interaction data that includes the query keyword.

In another embodiment of the present invention, the obtaining unit 210 may include a receiving subunit and an obtaining subunit.

The receiving subunit is configured to receive a filter keyword sent by the terminal.

The obtaining subunit is configured to obtain specified network interaction data from obtained network interaction data between the server and the terminal, where the specified network interaction data is network interaction data that includes the filter keyword received by the receiving subunit.

The receiving subunit is further configured to receive a query keyword sent by the terminal, where the query keyword includes a character of the filter keyword.

The obtaining subunit is further configured to obtain the target network interaction data from the specified network interaction data. The target network interaction data is network interaction data that includes the query keyword received by the receiving subunit.

The sending unit 220 is configured to send the target network interaction data obtained by the obtaining unit 210 to the terminal, where the target network interaction data is used by the terminal to validate the target network interaction data.

Corresponding to the foregoing web page automated testing apparatus embodiment, the present invention further provides a terminal, where the terminal includes a processor.

The processor is configured to obtain target network interaction data between the terminal and a server, and validate the target network interaction data.

The target network interaction data includes a network request sent by the terminal to the server, and a response message that is received by the terminal and is returned by the server. The response message is a response of the server to the network request sent by the terminal.

In an embodiment of the present invention, the processor is specifically configured to:
obtain specified network interaction data from network interaction data that is obtained by the terminal and is between the terminal and the server. The specified network interaction data is network interaction data that includes a filter keyword; and
obtain, from the specified network interaction data, network interaction data that includes a query keyword, so as to obtain the target network interaction data, where the query keyword includes a character of the filter keyword.

In another embodiment of the present invention, the processor is specifically configured to obtain, from network interaction data that is obtained by the terminal and is between the terminal and the server, network interaction data that includes the query keyword, so as to obtain the target network interaction data.

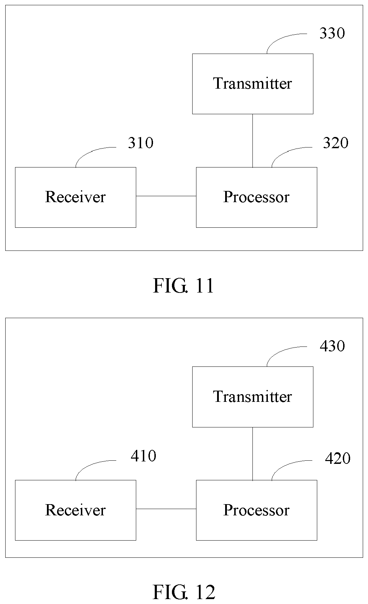

Referring to FIG. 11, FIG. 11 shows a schematic structural diagram of another terminal according to an embodiment of the present invention. The terminal is integrated with a web page automated testing tool. As shown in FIG. 11, the terminal includes: a transmitter 330, a processor 320, and a receiver 310. The transmitter 330 is connected to the processor 320, and the receiver 310 is connected to the processor 320.

The transmitter 330 is configured to send a filter keyword to the server. The filter keyword is used to enable the server to obtain specified network interaction data from obtained network interaction data between the terminal and the server. The specified network interaction data is network interaction data that includes the filter keyword.

The server is integrated with a network agent module, and obtains the network interaction data between the terminal and the server by using the network agent module.

The transmitter 330 is further configured to send a query keyword to the server. The query keyword is used to enable the server to obtain target network interaction data from the specified network interaction data. The target network interaction data is network interaction data that includes the query keyword, and the query keyword includes at least a character of the filter keyword.

The receiver 310 is configured to receive the target network interaction data sent by the server.

The processor 320 is configured to validate the target network interaction data received by the receiver 310.

Referring to FIG. 12, FIG. 12 shows a schematic structural diagram of still another terminal according to an embodiment of the present invention. As shown in FIG. 12, the terminal includes: a transmitter 430, a processor 420, and a receiver 410, where the transmitter 430 is connected to the processor 420, and the receiver 410 is connected to the processor 420.

The transmitter 430 is configured to send a query keyword to the server. The query keyword is used to enable the server to obtain target network interaction data from obtained network interaction data between the terminal and the server. The target network interaction data is network interaction data that includes the query keyword.

The receiver 410 is configured to receive the target network interaction data sent by the server.

The processor 420 is configured to validate the target network interaction data received by the receiver 410.

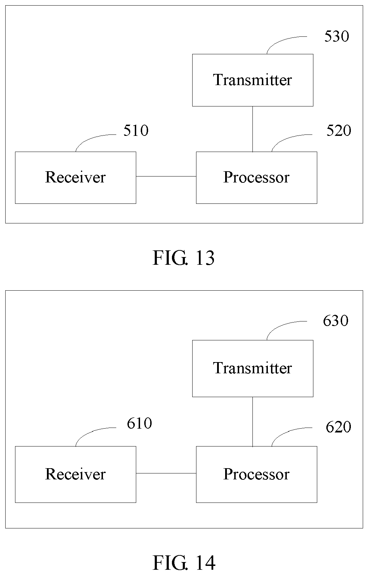

Corresponding to the foregoing terminal embodiment, the present invention further provides a server. As shown in FIG. 13, the server includes: a receiver 510, a processor 520, and a transmitter 530, where the transmitter 530 is connected to the processor 520, and the receiver 510 is connected to the processor 520.

The receiver 510 is configured to receive a query keyword sent by a terminal.

The processor 520 is specifically configured to obtain target network interaction data from obtained network interaction data between the server and the terminal.

The target network interaction data is network interaction data that includes the query keyword. The target network interaction data includes a network request that is received by the server and is sent by the terminal, and a response message sent by the server to the terminal. The response message is a response of the server to the network request sent by the terminal.

The transmitter 530 is configured to send the target network interaction data obtained by the processor 520 to the terminal, so that the terminal validates the target network interaction data.

The server provided in this embodiment receives, by using a receiver, a query keyword set by a terminal; obtains, from network interaction data between the terminal and the server by using an internal integrated network agent module, target network interaction data that includes the query keyword; and sends the target network interaction data to the terminal. The terminal validates the target network interaction data. This implements validation on network interaction data between a web page or a browser and the server, thereby improving a testing capability of a web page automated testing tool.

Referring to FIG. 14, FIG. 14 shows a schematic structural diagram of another server according to an embodiment of the present invention. The server is integrated with a network agent module. As shown in FIG. 14, the server includes: a receiver 610, a processor 620, and a transmitter 630. The transmitter 630 is connected to the processor 620, and the receiver 610 is connected to the processor 620.

The receiver 610 is configured to receive a filter keyword sent by the terminal.

The processor 620 is configured to obtain specified network interaction data from obtained network interaction data between the server and the terminal.

The specified network interaction data is network interaction data that includes the filter keyword.

The receiver 610 is further configured to receive a query keyword sent by the terminal.

The query keyword includes a character of the filter keyword.

The processor 620 is further configured to obtain target network interaction data from the specified network interaction data. The target network interaction data is network interaction data that includes the query keyword received by the receiver 610.

The transmitter 630 is configured to send the target network interaction data obtained by the processor 620 to the terminal, where the target network interaction data is used by the terminal to validate the target network interaction data.

The server provided in this embodiment receives, by using a receiver, a filter keyword sent by a terminal; obtains, by using an internal integrated network agent module, specified network interaction data that includes the filter keyword; then receives, by using the receiver, a query keyword sent by the terminal; obtains, from the specified network interaction data by using the network agent module, target network interaction data that includes the query keyword; and sends the target network interaction data to the terminal. The terminal validates the target network interaction data. This implements validation on network interaction data between a web page or a browser and the server, thereby improving a testing capability of a web page automated testing tool.

In another aspect, an embodiment of the present invention further provides a computer storage medium, where the computer storage medium may store a program, and the program may execute the method embodiments shown in FIG. 2-FIG. 6.

In still another aspect, an embodiment of the present invention further provides a computer storage medium, where the computer storage medium may store a program, and the program may execute the method embodiment shown in FIG. 7.

The embodiments in this specification are all described in a progressive manner, for same or similar parts in the embodiments, reference may be made to these embodiments, and each embodiment focuses on a difference from other embodiments. Especially, apparatus or system embodiments are basically similar to a method embodiment, and therefore are described briefly; for related parts, reference may be made to partial descriptions in the method embodiment. The described apparatus and system embodiments are merely examples. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of the embodiments. A person of ordinary skill in the art may understand and implement the embodiments of the present invention without creative efforts.

The present invention can be described in the general context of executable computer instructions executed by a computer, for example, a program module. Generally, the program unit includes a routine, program, object, component, data structure, and the like for executing a particular task or implementing a particular abstract data type. The present invention may also be practiced in distributed computing environments in which tasks are performed by remote processing devices that are connected by using a communications network. In a distributed computing environment, program modules may be located in both local and remote computer storage media including storage devices.

It should be noted that in this specification, relational terms such as "first" and "second" are only used to distinguish one entity or operation from another, and do not necessarily require or imply that any actual relationship or sequence exists between these entities or operations. Moreover, the terms "include", "include", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the presence of additional identical elements in the process, method, article, or device that includes the element.

The foregoing descriptions are merely specific implementation manners of the present invention. It should be noted that a person of ordinary skill in the art may make several improvements or polishing without departing from the principle of the present invention and the improvements or polishing shall fall within the protection scope of the present invention.

## Claims

1. A web page automated testing method, comprising:
obtaining, by a terminal, target network interaction data between the terminal and a server, wherein the target network interaction data comprises a network request sent by the terminal to the server, and a response message that is received by the terminal and is returned by the server, wherein the response message is a response of the server to the network request sent by the terminal; and
validating, by the terminal, the target network interaction data.

2. The method according to claim 1, wherein the obtaining, by a terminal, target network interaction data between the terminal and a server comprises:
obtaining, by the terminal, specified network interaction data from network interaction data that is obtained by the terminal and is between the terminal and the server, wherein the specified network interaction data is network interaction data that comprises a filter keyword; and
obtaining, by the terminal from the specified network interaction data, network interaction data that comprises a query keyword, so as to obtain the target network interaction data, wherein the query keyword comprises a character of the filter keyword.

3. The method according to claim 1, wherein the obtaining, by a terminal, target network interaction data between the terminal and a server comprises:
obtaining, by the terminal from network interaction data that is obtained by the terminal and is between the terminal and the server, network interaction data that comprises the query keyword, so as to obtain the target network interaction data.

4. The method according to claim 1, wherein the obtaining, by a terminal, target network interaction data between the terminal and a server comprises:
sending, by the terminal, a filter keyword to the server, wherein the filter keyword is used to enable the server to obtain specified network interaction data from obtained network interaction data between the terminal and the server, wherein the specified network interaction data is network interaction data that comprises the filter keyword;
sending, by the terminal, a query keyword to the server, wherein the query keyword is used to enable the server to obtain the target network interaction data from the specified network interaction data, wherein the target network interaction data is network interaction data that comprises the query keyword, and the query keyword comprises at least a character of the filter keyword; and
receiving, by the terminal, the target network interaction data sent by the server.

5. The method according to claim 1, wherein the obtaining, by a terminal, target network interaction data between the terminal and a server comprises:
sending, by the terminal, a query keyword to the server, wherein the query keyword is used to enable the server to obtain the target network interaction data from obtained network interaction data between the terminal and the server, wherein the target network interaction data is network interaction data that comprises the query keyword; and
receiving, by the terminal, the target network interaction data sent by the server.

6. A web page automated testing method, comprising:
obtaining, by a server, target network interaction data between the server and a terminal, wherein the target network interaction data comprises a network request that is received by the server and is sent by the terminal, and a response message sent by the server to the terminal, wherein the response message is a response of the server to the network request sent by the terminal; and
sending, by the server, the target network interaction data to the terminal, wherein the target network interaction data is used by the terminal to validate the target network interaction data.

7. The method according to claim 6, wherein the obtaining, by a server, target network interaction data between the server and a terminal comprises:
receiving, by the server, a query keyword sent by the terminal; and
obtaining, by the server, the target network interaction data from obtained network interaction data between the server and the terminal, wherein the target network interaction data is network interaction data that comprises the query keyword.

8. The method according to claim 6, wherein the obtaining, by a server, target network interaction data between the server and a terminal comprises:
receiving, by the server, a filter keyword sent by the terminal;
obtaining, by the server, specified network interaction data from obtained network interaction data between the server and the terminal, wherein the specified network interaction data is network interaction data that comprises the filter keyword;
receiving, by the server, a query keyword sent by the terminal, wherein the query keyword comprises a character of the filter keyword; and
obtaining, by the server, the target network interaction data from the specified network interaction data, wherein the target network interaction data is network interaction data that comprises the query keyword.

9. A web page automated testing apparatus, applied to a terminal, wherein the apparatus comprises:
an obtaining unit, configured to obtain target network interaction data between the terminal and a server, wherein the target network interaction data comprises a network request sent by the terminal to the server, and a response message that is received by the terminal and is returned by the server, wherein the response message is a response of the server to the network request sent by the terminal; and
a validation unit, configured to validate the target network interaction data obtained by the obtaining unit.

10. The apparatus according to claim 9, wherein the obtaining unit comprises:
a first obtaining subunit, configured to obtain specified network interaction data from obtained network interaction data between the terminal and the server, wherein the specified network interaction data is network interaction data that comprises a filter keyword; and
a second obtaining subunit, configured to obtain, from the specified network interaction data obtained by the first obtaining subunit, network interaction data that comprises a query keyword, so as to obtain the target network interaction data, wherein the query keyword comprises a character of the filter keyword.

11. The apparatus according to claim 9, wherein the obtaining unit comprises:
a third obtaining subunit, configured to obtain, from obtained network interaction data between the terminal and the server, network interaction data that comprises the query keyword, so as to obtain the target network interaction data.

12. The apparatus according to claim 9, wherein the obtaining unit comprises a sending subunit and a receiving subunit, wherein
the sending subunit is configured to send a filter keyword to the server, wherein the filter keyword is used to enable the server to obtain specified network interaction data from obtained network interaction data between the terminal and the server, wherein the specified network interaction data is network interaction data that comprises the filter keyword;
the sending subunit is further configured to send a query keyword to the server, wherein the query keyword is used to enable the server to obtain the target network interaction data from the specified network interaction data, wherein the target network interaction data is network interaction data that comprises the query keyword, and the query keyword comprises at least a character of the filter keyword; and
the receiving subunit is configured to receive the target network interaction data sent by the server.

13. The apparatus according to claim 9, wherein the obtaining unit comprises a sending subunit and a receiving subunit, wherein
the sending subunit is configured to send a query keyword to the server, wherein the query keyword is used to enable the server to obtain the target network interaction data from obtained network interaction data between the terminal and the server, wherein the target network interaction data is network interaction data that comprises the query keyword; and
the receiving subunit is configured to receive the target network interaction data sent by the server.

14. A terminal, comprising:
a processor, configured to obtain target network interaction data between the terminal and a server, wherein the target network interaction data comprises a network request sent by the terminal to the server, and a response message that is received by the terminal and is returned by the server, wherein the response message is a response of the server to the network request sent by the terminal, wherein
the processor is further configured to validate the target network interaction data.

15. The terminal according to claim 14, wherein the processor is specifically configured to:
obtain specified network interaction data from network interaction data that is obtained by the terminal and is between the terminal and the server, wherein the specified network interaction data is network interaction data that comprises a filter keyword; and
obtain, from the specified network interaction data, network interaction data that comprises a query keyword, so as to obtain the target network interaction data, wherein the query keyword comprises a character of the filter keyword.

16. The terminal according to claim 14, wherein the processor is specifically configured to:
obtain, from network interaction data that is obtained by the terminal and is between the terminal and the server, network interaction data that comprises the query keyword, so as to obtain the target network interaction data.

17. The terminal according to claim 14, further comprising a transmitter and a receiver, wherein the transmitter is connected to the processor, and the receiver is connected to the processor;
the transmitter is configured to send a filter keyword to the server, wherein the filter keyword is used to enable the server to obtain specified network interaction data from obtained network interaction data between the terminal and the server, wherein the specified network interaction data is network interaction data that comprises the filter keyword;
the transmitter is further configured to send a query keyword to the server, wherein the query keyword is used to enable the server to obtain the target network interaction data from the specified network interaction data, wherein the target network interaction data is network interaction data that comprises the query keyword, and the query keyword comprises at least a character of the filter keyword; and
the receiver is configured to receive the target network interaction data sent by the server, and send the target network interaction data to the processor.

18. The terminal according to claim 14, further comprising a transmitter and a receiver, wherein the transmitter is connected to the processor, and the receiver is connected to the processor;
the transmitter is configured to send a query keyword to the server, wherein the query keyword is used to enable the server to obtain the target network interaction data from obtained network interaction data between the terminal and the server, wherein the target network interaction data is network interaction data that comprises the query keyword; and
the receiver is configured to receive the target network interaction data sent by the server, and provide the target network interaction data for the processor.

19. A web page automated testing apparatus, comprising:
an obtaining unit, configured to obtain target network interaction data between a server and a terminal, wherein the target network interaction data comprises a network request that is received by the server and is sent by the terminal, and a response message sent by the server to the terminal, wherein the response message is a response of the server to the network request sent by the terminal; and
a sending unit, configured to send the target network interaction data obtained by the obtaining unit to the terminal, wherein the target network interaction data is used by the terminal to validate the target network interaction data.

20. The apparatus according to claim 19, wherein the obtaining unit comprises a receiving subunit and an obtaining subunit, wherein
the receiving subunit is configured to receive a query keyword sent by the terminal; and
the obtaining subunit is configured to obtain the target network interaction data from obtained network interaction data between the server and the terminal, wherein the target network interaction data is network interaction data that comprises the query keyword received by the receiving subunit.

21. The apparatus according to claim 19, wherein the obtaining unit comprises a receiving subunit and an obtaining subunit, wherein
the receiving subunit is configured to receive a filter keyword sent by the terminal;
the obtaining subunit is configured to obtain specified network interaction data from obtained network interaction data between the server and the terminal, wherein the specified network interaction data is network interaction data that comprises the filter keyword received by the receiving subunit;
the receiving subunit is further configured to receive a query keyword sent by the terminal, wherein the query keyword comprises a character of the filter keyword; and
the obtaining subunit is further configured to obtain the target network interaction data from the specified network interaction data, wherein the target network interaction data is network interaction data that comprises the query keyword received by the receiving subunit.

22. A server, comprising a processor and a transmitter, wherein the transmitter is connected to the processor;
the processor is configured to obtain target network interaction data between the server and a terminal, wherein the target network interaction data comprises a network request that is received by the server and is sent by the terminal, and a response message sent by the server to the terminal, wherein the response message is a response of the server to the network request sent by the terminal; and
the transmitter is configured to send the target network interaction data obtained by the processor to the terminal, wherein the target network interaction data is used by the terminal to validate the target network interaction data.

23. The server according to claim 22, further comprising a receiver, wherein the receiver is connected to the processor;
the receiver is configured to receive a query keyword sent by the terminal; and
the processor is specifically configured to obtain the target network interaction data from obtained network interaction data between the server and the terminal, wherein the target network interaction data is network interaction data that comprises the query keyword sent by the receiver.

24. The server according to claim 22, further comprising a receiver, wherein the receiver is connected to the processor;
the receiver is configured to receive a filter keyword sent by the terminal;
the processor is specifically configured to obtain specified network interaction data from obtained network interaction data between the server and the terminal, wherein the specified network interaction data is network interaction data that comprises the filter keyword sent by the receiver;
the receiver is further configured to receive a query keyword sent by the terminal, wherein the query keyword comprises a character of the filter keyword; and
the processor is specifically configured to obtain the target network interaction data from the specified network interaction data, wherein the target network interaction data is network interaction data that comprises the query keyword sent by the receiver.

25. A computer storage medium, wherein the computer storage medium may store a program, and when the program is executed, a step according to any one of claims 1 to 5 is performed.

26. A computer storage medium, wherein the computer storage medium may store a program, and when the program is executed, a step according to any one of claims 6 to 8 is performed.
